Europäisches Patentamt

European Patent Office

Office européen des brevets

(11) Veröffentlichungsnummer: **0 225 477**
**A2**

# (12) EUROPÄISCHE PATENTANMELDUNG

(21) Anmeldenummer: 86115219.7

(22) Anmeldetag: 03.11.86

(51) Int. Cl.⁴: **F02F 3/00**

(30) Priorität: **12.11.85 DE 3540085**

(43) Veröffentlichungstag der Anmeldung:
**16.06.87 Patentblatt 87/25**

(84) Benannte Vertragsstaaten:
**AT DE ES FR GB IT NL SE**

(71) Anmelder: **Alcan Aluminiumwerk Nürnberg GmbH
Nopitschstrasse 67
D-8500 Nürnberg(DE)**

(72) Erfinder: **Rösch, Fritz, Dipl.-Ing.
Kirchenweg 4
D-8540 Schwabach(DE)**

(74) Vertreter: **Eitle, Werner, Dipl.-Ing. et al
Hoffmann, Eitle & Partner Patentanwälte
Arabellastrasse 4
D-8000 München 81(DE)**

(54) **Kolben für Brennkraftmaschinen.**

(57) Kolben für Brennkraftmaschinen, bestehend aus einem den Kolbenboden bildenden Oberteil (1) und einem den Kolbenschaft bildenden Unterteil (2). Diese beiden Kolbenteile sind über ringförmige Berührungsflächen (10) gegeneinander in Kolbenachsrichtung abgestützt und durch einen Kolbenbolzen (5) oder eine Kolbenbolzenbuchse (14) miteinander verbunden. Um einen solchen unverschraubten Kolben so zu gestalten, daß dessen Oberteil nicht steif und schwer wie bei einem Pendelkolben ausgebildet sein muß und der Einbau von Kühlkanälen zwischen Kolbenober-und Kolbenunterteil ohne besonderen Aufwand möglich ist sowie die Bauhöhe des Kolbens gering sein kann, sind erfindungsgemäß die Berührungsflächen (10) in Richtung der Kolbenachse gegeneinander dadurch verspannt, daß die Kolbenbolzenbohrung (7) in dem einen Kolbenteil (1) zu der Kolbenbolzenbohrung (9) in dem anderen Kolbenteil (4) im unverspannten Zustand in Richtung der Kolbenachse versetzt angeordnet sind. Dabei kann die Versetzung zwischen 0,5 ‰ bis 10 ‰ des Kolbendurchmessers betragen. Durch diese erfindungsgemäße Versetzung wird eine weitgehend starre form-und kraftschlüssige Verbindung zwischen den beiden Kolbenteilen gewährleistet.

FIG. 1

## Kolben für Brennkraftmaschinen

Die Erfindung betrifft Kolben für Brennkraftmaschinen, bestehend aus einem den Kolbenboden bildenden Oberteil und einem den Kolbenschaft bildenden Unterteil, wobei Oberteil und Unterteil über ringförmige Berührungsflächen sich gegeneinander in Kolbenachsrichtung abstützen und durch einen Kolbenbolzen oder eine Kolbenbolzenbüchse miteinander verbunden sind.

Derartige mehrteilige Kolben sind bekannt. Bei ihnen müssen Ober-und Unterteil, die aus verschiedenen, aber auch aus gleichen Werkstoffen hergestellt sein können, durch Verbindungselemente, wie z.B. Schrauben, oder, wie bei den bekannten sogenannten Pendelschaftkolben, durch den Kolbenbolzen miteinander verbunden werden, der durch beide Kolbenteile hindurchgreift.

Die bekannten mehrteiligen verschraubten Kolben bestehen meistens aus zwei unterschiedlichen Materialien, wobei das Material des Oberteils wegen dessen hoher thermischer und mechanischer Belastung, z.B. aus Stahl oder Grauguß bestehen sollte, während das Unterteil, das hauptsächlich Führungsaufgaben hat, aus gewichtssparendem Leichtmetall bestehen kann.Verschraubte mehrteilige Kolben haben jedoch den Nachteil, daß durch die Verschraubung ihr Gewicht erhöht und die Montage erschwert wird, so daß keine kostengünstige Herstellung solcher Kolben möglich ist. Außerdem sind Verschraubungen unter thermischer und mechanischer Wechsellast oft problematisch.

Bei den bekannten Pendelschaftkolben, bei welchen sowohl Oberteil als auch Unterteil aus gleichen oder auch aus verschiedenen Werkstoffen bestehen kann, wird die Zündkraft vom Oberteil direkt über den Bolzen auf das Pleuel weitergeleitet, während die Seitenführungskräfte von dem "pendelnden", d.h. in axialer Richtung am Umfang den Kolbenoberteil nicht stützenden Unterteil aufgenommen werden (z.B. DE-PS 571 548, DE-AS 2 253 961, DE-OS(en) 27 17 692 und 33 38 419 sowie DE-PS 2 717 084).

Der Nachteil der bekannten Pendelkolben liegt darin, daß das in der Nähe des Außendurchmessers gegenüber dem Unterteil nicht abgestützte Oberteil durch die großen Zündkräfte, die besonders im Randbereich auf die Kolbenstirnfläche einwirken, stark verformt wird. Um diesen Belastungen standzuhalten, muß das Oberteil steif, d.h. dickwandig oder mit Verrippungen ausgeführt sein, was zur Gewichtserhöhung führt. Außerdem ist der Einbau von Kühlkanälen wegen des umlaufenden Spaltes zwischen Ober-und Unterteil nicht ohne besonderen Aufwand möglich - (siehe insbesondere DE-OS 33 38 419).

Der Erfindung liegt die Aufgabe zugrunde, einen unverschraubten Kolben, also einen Kolben, bei welchem Kolbenober-und Kolbenunterteil nur durch den Kolbenbolzen oder eine Kolbenbolzenbüchse verbunden sind, so zu gestalten, daß dessen Oberteil nicht so steif und schwer wie bei einem Pendelkolben ausgebildet sein muß, und daß der Einbau von Kühlkanälen zwischen Kolbenober-und -unterteil ohne besonderen Aufwand möglich ist. Außerdem soll die Bauhöhe des Kolbens möglichst gering sein.

Diese Aufgabe wird erfindungsgemäß durch die im kennzeichnenden Teil des Anspruchs 1 angegebenen Merkmale gelöst. Mit dieser erfindungsgemäßen Ausbildung des eingangs genannten Kolbens wird eine gegenseitige Verspannung von Kolbenoberteil und Kolbenunterteil in Richtung der Kolbenachse erreicht, was zu einer form-und kraftschlüssigen, weitgehend starren Verbindung zwischen Kolbenober-und Kolbenunterteil führt, wodurch die Verformung des Kolbenoberteils unter dem hohen Zünddruck verringert wird, so daß das Kolbenoberteil leichter und einfacher gestaltet werden kann. Außerdem wird hierdurch eine kurze Bauhöhe des gesamten Kolbens möglich, da das Kolbenoberteil nur den Kompressionsring tragen muß, während alle weiteren Kolbenringe auch im Unterteil angeordnet sein können. Ferner wird durch das Verspannen der beiden Kolbenteile eine Abdichtung in der Verbindungsfläche erreicht, wodurch eine problemlose Anordnung von beliebig gestalteten Kühlkanälen zwischen Ober-und Unterteil möglich wird. Dabei können diese Kühlkanäle Kreisringform, aber auch eine von dieser Form abweichende Form haben bzw. nur teilweise umlaufend ausgeführt sein, z.B. wenn der Kolben mit stark exzentrischer Brennraummulde ausgeführt ist.

Die erfindungsgemäß vorgesehene Versetzung der Kolbenbolzenbohrungen im Unterteil und Oberteil zueiander beträgt zweckmäßig 0,5‰ bis 10‰ des Kolbendurchmessers. Das Ausmaß der Versetzung ist abhängig von den für Kolbenoberteil und Kolbenunterteil verwendeten Werkstoffen und den zu erwartenden Betriebstemperaturen der Kolbenteile. Die aufeinandergepreßten ringförmigen Berührungsflächen von Kolbenober-und Kolbenunterteil können eben oder abgestuft sein. Sie können sich senkrecht oder im wesentlichen senkrecht zur Kolbenachse, aber auch schräg zu dieser erstrecken.

Es kann ferner zweckmäßig sein, zwischen den Abstützflächen von Kolbenober-und Kolbenunterteil eine Schicht aus Kitt oder Klebstoff anzuordnen. Diese Kitt-oder Klebstoffschicht kann schon vor dem Verspannen der Kolbenteile angeordnet sein, wodurch es möglich wird, den Kolben mit seinen beiden Teilen als Einheit zu transportieren, bevor diese Teile bei der Endmontage durch den Kolbenbolzen verspannt werden. Außerdem kann durch eine solche Kitt-oder Klebstoffschicht die Abdichtung eines zwischen Kolbenober-und Kolbenunterteil vorgesehenen Kühlkanals verbessert werden.

In der Zeichnung sind Ausführunsbeispiele des erfindungsgemäßen Kolbens dargestellt, die besonders zweckmäßig bzw. vorteilhaft sind und im folgenden näher beschrieben werden:

Fig. 1 bis 3 zeigen drei verschiedene Ausführungsbeispiele, jeweils in zwei im Winkel von 90° zueinander stehenden Axialschnitten.

Fig. 4 zeigt in einer Detaildarstellung eine Abwandlung beim Ausführungsbeispiel gemäß Fig. 2 oder 3.

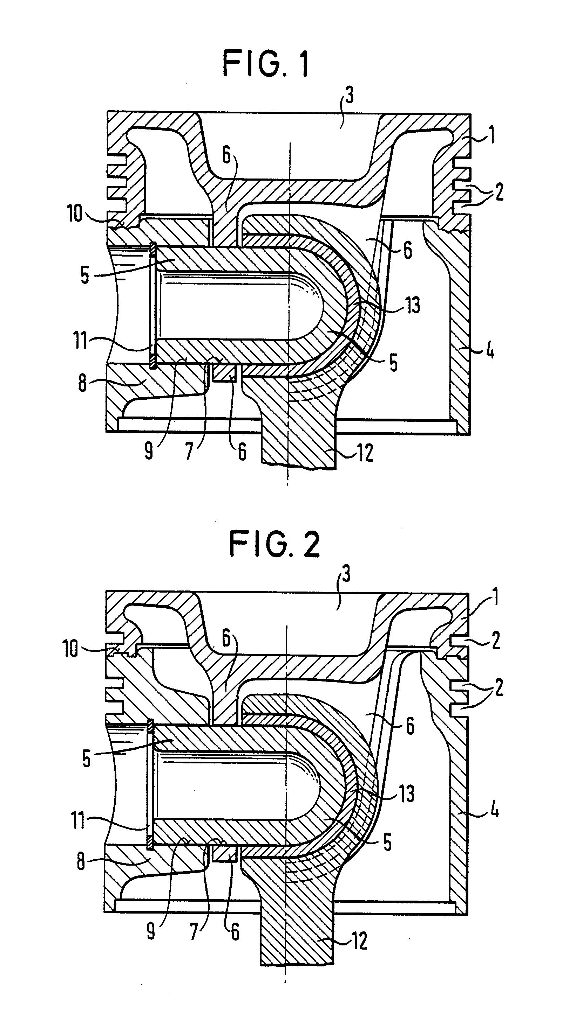

Bei dem in Fig. 1 dargestellten ersten Ausführungsbeispiel weist das Kolbenoberteil 1 sämtliche zur Aufnahme der Kolbenringe bestimmte Ringnuten 2 auf. Ferner besitzt das Kolbenoberteil eine mit der Kolbenachse konzentrische Brennraummulde 3. Mit diesem Kolbenoberteil 1 ist der den Kolbenschaft bildende Kolbenunterteil 4 über den Kolbenbolzen 5 verbunden.

Zur Lagerung des Kolbenbolzens 5 im Kolbenoberteil ist dieser Oberteil mit zwei Stegen 6 ausgebildet, in welchen sich die Kolbenbolzenbohrung 7 befindet. Das Kolbenunterteil 4 besitzt dagegen für die Bolzehlagerung einen an seinem Maantel radial einspringenden Teil 8, in welchem sich die Kolbenbolzenbohrung 9 befindet. Die Kolenbolzenbohrung 7 im Kolbenobertteil 1 ist gegenüber der Kolbenbolzenbohrung 9 im Kolbenunterteil 4 so angeordnet, daß sie vor dem Einsetzen des Kolbenbolzens 5 um 0,5‰, bis 10‰ des Kolbendurchmessers in Richtung der Kolbenachse zum Kolbenkopf hin versetzt it, wenn Ober-und Unterteil 1, 4 mit ihren ringförmigen Berührungsflächen 10 unverspannt aneinanderliegen. In Fig. 1 liegt also or dem Einsetzen des Kolbens 5 in die Kolbenbolzenbohrungen die Bohrung 9 um das vorerwähnte Maß tiefer als die Bohrung 7. Beim Einsetzen des Kolbenbolzens 5 in die Kolbenbolzenbohrungen 7 und 9 werden das Kolbenunterteil 4 gegen das Kolbenoberteil 1 und damit die Berührungsflächen 10 dieser beiden Kolbenteile in Richtung der Kolbenachse gegeneinander verspannt, was zu einer form-und kraftschlüssigen, weitgehend starren Verbindung zwischen den beiden Kolbenoberteilen führt.

Der in die Kolbenbolzenbohrungen eingesetzte Kolbenbolzen 5 ist durch an seinen beiden Stirnenden anliegende Sprengringe 11 in seine Lage in den Bohrungen 7,9 festgelegt. Das Pleuel 12 ist mittels einer auf dem Kolbenbolzen 5 sitzenden Pleuellagerbüchse 13 auf dem Kolbenbolzen 5 gelagert.

Das Ausführungsbeispiel gemäß Fig. 2 unterscheidet sich von demjenigen gemäß Fig. 1 im wesentlichen nur dadurch, daß die Berührungsflächen 10 zwischen Kolbenoberteil 1 und Kolbenunterteil 4 etwas anders profiliert sind und daß das Kolbenoberteil in Kolbenachsrichtung kürzer und das Kolbenunterteil in dieser Richtung länger ausgebildet ist. Hierdurch ist im Kolbenoberteil 1 nur eine Ringnut angeordnet, während die beiden anderen Ringnuten 2 sich im Kolbenunterteil befinden.

Im übrigen ist auch bei diesem Ausführungsbeispiel die gegenseitige Verspannung zwischen Kolbenober-und Kolbenunterteil in gleicher Weise vorgenommen wie beim Ausführungsbeispiel gemäß Fig.1.

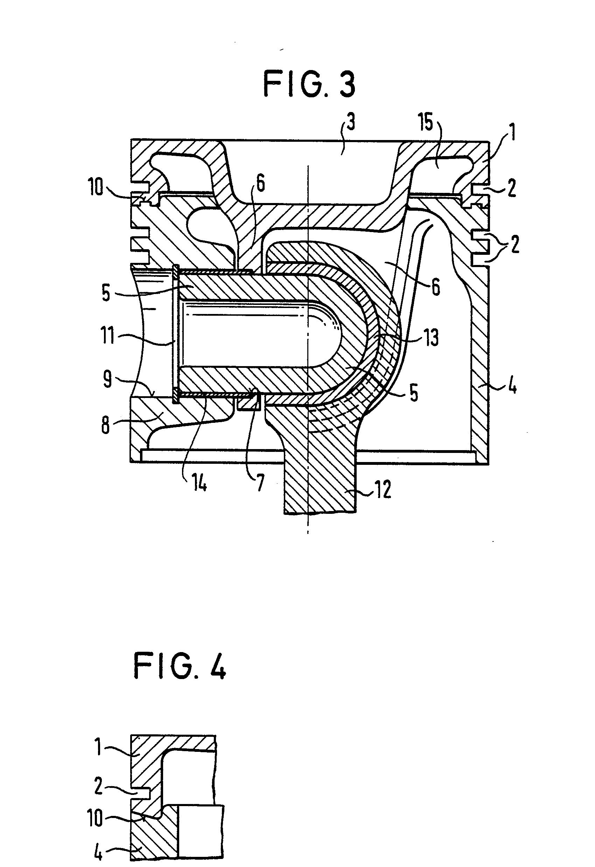

Das Ausführungsbeispiel gemäß Fig. 3 unterscheidet sich von demjenigen gemäß Fig. 2 dadurch, daß die erfindungsgemäße Verspannung von Kolbenoberteil 1 und Kolbenunterteil 4 durch in die Kolbenbolzenbohrungen 7 und 9 von beiden Kolbenseiten her eingetriebene Buchsen 14 gegeneinander verspannt sind. Auch bei diesem Ausführungsbeispiel ist also die Kolbenbolzenbohrung 9 gegenüber der Kolbenbolzenbohrung 7 vor dem Einsetzen der Buchsen 14 in Richtung der Kolbenachse geringfügig versetzt, um beim Einsetzen der Buchsen 14 zu einem Verspannen der beiden Kolbenteile 1 und 4 im Bereich ihrer Berührungsflächen 10 zu führen. Diese Ausbildung hat den Vorteil, daß der in den Buchsen 14 lagernde Kolbenbolzen 5 selbst nicht durch Vorspannkräfte in seiner freien Bewegung behindert ist.

Außerdem sind Kolbenoberteil und Kolbenunterteil in diesem Beispiel so ausgebildet, daß sie beim Zusammenspannen zwischen sich einen weitgehend abgedichteten Kühlkanal 15 bilden, der an nicht dargestellten Stellen mit einem Zulauf und einem Ablauf für einen Kühlölstrom versehen ist.

Die Berührungsflächen 10 von Kolbenober-und Kolbenunterteil 1,4 sind in den drei dargestellten Ausführungsbeispielen profiliert oder abgestuft ausgebildet, wobei die Berührungsfläche des Kolbenoberteils zur Berührungsfläche des Kolbenunterteils parallel verläuft. Es ist aber auch möglich, daß die Berührungsflächen 10 der beiden Kolbenteile 1,4 nicht genau parallel zueinander verlaufen. Dies kann z.B. vorteilhaft sein, wenn die Verspannung der beiden Kolbenteile z.B. in Zonen größerer Verformung oder höherer thermischer Belastung des Kolbenoberteiles geringer gewählt werden soll als in den übrigen Zonen oder umgekehrt.

Es ist auch möglich, die einander gegenüberliegenden Berührungsflächen 10 der Kolbenteile 1,4 ebenflächig auszubilden.

In Fig. 4 ist eine Variante der Berührungsfläche 10 zwischen Kolbenoberteil 1 und Kolbenunterteil 4 dargestellt, die ebenfalls zweckmäßig sein kann. Bei dieser Ausführung erstrecken sich die Berührungsflächen in ihrem radial äußeren Bereich unter einer solchen Schräge zur Kolbenachse, daß unter Wirkung des Zünddrucks der Feuersteg des Kolbenkopfes schräg in Richtung auf die Kolbenachse hingedrückt und so der durch den Zünddruck verursachten Biegeverformung des Oberteiles 1 entgegengewirkt wird.

**Ansprüche**

1. Kolben für Brennkraftmaschinen, bestehend aus einem den Kolbenboden bildenden Oberteil und einem den Kolbenschaft bildenden Unterteil, wobei Oberteil und Unterteil über ringförmige Berührungsflächen sich gegeneinander in Kolbenachsrichtung abstützen und durch einen Kolbenbolzen oder eine Kolbenbolzenbüchse miteinander verbunden sind, dadurch **gekennzeichnet**, daß die Berührungsflächen (10) in Richtung der Kolbenachse gegeneinander dadurch verspannt sind, daß die Kolbenbolzenbohrung (7) in dem einen Kolbenteil (1) zu der Kolbenbolzenbohrung (9) im anderen Kolbenteil (4) im unverspannten Zustand in Richtung der Kolbenachse zum Kolbenkopf hin versetzt angeordnet ist.

2. Kolben nach Anspruch 1, dadurch **gekennzeichnet**, daß die Kolbenbolzenbohrung (7) in dem einen Kolbenteil (1) zu derjenigen (9) im anderen Kolbenteil (4) um 0,5 ‰ bis 10‰ des Kolbendurchmessers versetzt ist.

3. Kolben nach Anspruch 1, dadurch **gekennzeichnet**, daß die Berührungsflächen (10) von Kolbenoberteil (1) und Kolbenunterteil (4) zueinander parallel verlaufen und sich senkrecht oder im wesentlichen senkrecht zur Kolbenachse erstrecken.

4. Kolben nach Anspruch 1, dadurch **gekennzeichnet**, daß die Berührungsflächen (10) von Kolbenoberteil (1) und Kolbenunterteil (4) zueinander parallel verlaufen und sich geneigt zur Kolbenachse erstrecken.

5. Kolben nach Anspruch 1, dadurch **gekennzeichnet**, daß mindestens eine der beiden einander gegenüberliegenden Berührungsflächen (10) vom Kolbenoberteil (1) und Kolbenunterteil (4) in Richtung der Kolbenachse abgestuft oder profiliert ist.

6. Kolben nach Anspruch 1, dadurch **gekennzeichnet**, daß mindestens eine der beiden Berührungsflächen (10) im Axialschnitt durch den Kolben ebenflächig ist.

7. Kolben nach Anspruch 1, dadurch **gekennzeichnet**, daß zwischen den Berührungsflächen - (10) von Kolbenoberteil (1) und Kolbenunterteil (4) eine Schicht aus Kitt oder Klebstoff angeordnet ist.

8. Kolben nach Anspruch 1, dadurch **gekennzeichnet**, daß die einander gegenüberliegenden Berührungsflächen (10) von Kolbenoberteil (1) und Kolbenunterteil (4) zumindest in Zonen ihres Umfanges im Kolbenquerschnitt nur annähernd zueinander parallel, d.h. in geringem Winkel zueinander sich erstrecken.

9. Kolben nach Anspruch 1, dadurch **gekennzeichnet**, daß das Kolbenoberteil (1) und das Kolbenunterteil (4) so ausgebildet sind, daß sie einen durch das Verspannen von Ober-und Unterteil abgedichteten, als Kühlkanal benutzbaren Hohlraum - (15) umschließen.

# FIG. 1

# FIG. 2

## FIG. 3

## FIG. 4